(19) Europäisches Patentamt
European Patent Office
Office européen des brevets

(11) **EP 3 990 774 B1**

(12) **EUROPÄISCHE PATENTSCHRIFT**

(45) Veröffentlichungstag und Bekanntmachung des Hinweises auf die Patenterteilung:
**25.02.2026 Patentblatt 2026/09**

(21) Anmeldenummer: **20737097.4**

(22) Anmeldetag: **25.06.2020**

(51) Internationale Patentklassifikation (IPC):
**F03D 7/02** (2006.01)

(52) Gemeinsame Patentklassifikation (CPC):
**F03D 1/0633; F03D 7/0224; F03D 7/0232;**
F05B 2240/3042; F05B 2240/3052; F05B 2270/32;
F05B 2270/328; F05B 2270/332; Y02E 10/72

(86) Internationale Anmeldenummer:
**PCT/EP2020/067882**

(87) Internationale Veröffentlichungsnummer:
**WO 2020/260485 (30.12.2020 Gazette 2020/53)**

(54) **ROTOR FÜR EINE WINDENERGIEANLAGE, WINDENERGIEANLAGE UND ZUGEHÖRIGES VERFAHREN**

ROTOR FOR A WIND TURBINE, WIND TURBINE AND ASSOCIATED METHOD

ROTOR POUR ÉOLIENNE, ÉOLIENNE ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2019 DE 102019117365**

(43) Veröffentlichungstag der Anmeldung:
**04.05.2022 Patentblatt 2022/18**

(73) Patentinhaber: **Wobben Properties GmbH**
**26607 Aurich (DE)**

(72) Erfinder:
• **MESSING, Ralf**
**26605 Aurich (DE)**
• **BAUER, Ellen**
**26605 Aurich (DE)**
• **RUBNER, Florian**
**26607 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A1- 1 375 911    EP-A1- 2 253 838
EP-A2- 2 034 178    EP-A2- 2 778 401
CN-A- 104 989 591

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Rotor für eine Windenergieanlage, eine Windenergieanlage und ein Verfahren zur Ertragssteigerung eines Rotors einer Windenergieanlage.

Windenergieanlagen sind grundsätzlich bekannt, sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere gleichlange Rotorblätter.

Durch aeroakustische Effekte emittieren Windenergieanlagen für Menschen wahrnehmbare Geräusche. Bei der Konstruktion von Windenergieanlagen, insbesondere von Rotoren und Rotorblättern, ist es ein Ziel der Konstruktion, geringere Geräuschemissionen zu erreichen. Zur Reduzierung der Geräuschemissionen an einer Windenergieanlage werden häufig gezackte Hinterkanten, sogenannte Trailing Edge Serrations (TES), angeordnet. Bei der Konstruktion von Windenergieanlagen ist es ferner ein Ziel, den Ertrag der Windenergieanlage zu erhöhen.

Das Deutsche Patent- und Markenamt hat in der Prioritätsanmeldung zu vorliegender Anmeldung folgenden Stand der Technik recherchiert: DE 10 2008 016 007 A1, DE 10 2009 050 577 A1, DE 10 2015 113 404 A1, DE 10 2018 100 397 A1, US 2009/0 028 704 A1 und US 2013/0 115 082 A1.

EP 2 778 401 A2 beschreibt ein System und Verfahren zur druckbasierten Lastmessung. Das System und das Verfahren messen mindestens ein Druckdifferential an einem Rotorblatt und bestimmen mindestens eine aerodynamische Last, des mindestens einen Druckdifferentials. Die ermittelte Last wird verwendet, um die Eigenschaften des Rotorblattes zu modifizieren, um die Effizienz zu erhöhen und/oder Schäden zu vermeiden. Die ermittelte mindestens eine aerodynamische Last kann ferner zum Ausgleich und/oder zur Optimierung der Lasten an dem Rotorblatt verwendet werden, um eine Lastverteilung entlang des Rotorblattes zur Ableitung anderer Metriken über das Strömungsprofil abzuschätzen, und/oder in einem verteilten Steuersystem zur Erhöhung der Effizienz und/oder zur Verringerung von Schäden z.B. an einer oder mehreren Windturbinen verwendet zu werden.

EP 2 253 838 A1 beschreibt ein Verfahren zum Betrieb einer Windturbine mit einem Rotor umfassend ein Rotorblatt mit einer im Wesentlichen horizontalen Rotorwelle. Der Rotor umfasst eine Nabe, von der sich das Blatt im Wesentlichen in einer radialen Richtung erstreckt, wenn es an der Nabe befestigt ist. Das Rotorblatt weist eine profilierte Kontur auf, die eine Druckseite und eine Saugseite sowie eine Vorderkante und eine Hinterkante mit einer Sehne zwischen der Vorderkante und der Hinterkante aufweist, wobei die profilierte Kontur einen Auftrieb erzeugt, wenn sie von einer einfallenden Luftströmung beaufschlagt wird, wobei die Profilkontur in radialer Richtung unterteilt ist in einen Wurzelbereich mit einem im Wesentlichen kreisförmigen oder elliptischen Profil, das der Nabe am nächsten liegt, einen Tragflächenbereich mit einem Auftrieb erzeugenden Profil, das am weitesten von der Nabe entfernt ist, und vorzugsweise einen Übergangsbereich zwischen dem Wurzelbereich und dem Tragflächenbereich, wobei der Übergangsbereich ein Profil aufweist, das sich in radialer Richtung allmählich von dem kreisförmigen oder elliptischen Profil des Wurzelbereichs zu dem Auftrieb erzeugenden Profil des Tragflächenbereichs entwickelt, wobei der Tragflächenbereich Folgendes umfasst: ein erstes Basisteil mit einer Vorderkante und einer Hinterkante mit einer Sehne, die sich zwischen der Vorderkante und der Hinterkante erstreckt, wobei der Schaufelbereich ferner unterteilt ist in mindestens ein erstes Längssegment und ein zweites Längssegment, wobei sich das erste Längssegment entlang mindestens 20 % einer Längserstreckung des Tragflächenbereiches erstreckt. Das erste Basisteil hat eine inhärente nicht ideale aerodynamische Gestaltung, so dass ein wesentlicher Längsteil des Basisteils ohne strömungsändernde Vorrichtungen an einem Auslegungspunkt von einem angestrebten axialen Induktionsfaktor abweicht, wobei das Verfahren die folgenden Schritte umfasst: a) Einstellen eines Einstellwinkels des Rotorblatts und einer Drehzahl des Rotors, um den Ziel-Axialinduktionsfaktor des zweiten Längssegments zu erfüllen, und b) Bereitstellen und Anordnen von Strömungsänderungsvorrichtungen an dem ersten Längssegment, um den angestrebten axialen Induktionsfaktor des ersten Längssegments zu erfüllen.

Es ist daher eine Aufgabe der vorliegenden Erfindung, einen Rotor für eine Windenergieanlage, eine Windenergieanlage und ein Verfahren zur Ertragssteigerung eines Rotors einer Windenergieanlage bereitzustellen, die einen oder mehrere der genannten Nachteile vermindern oder beseitigen. Es ist insbesondere eine Aufgabe der Erfindung, eine Lösung bereitzustellen, die den Ertrag einer Windenergieanlage steigert.

Gemäß einem ersten Aspekt der vorliegenden Erfindung wird die Aufgabe gelöst durch einen Rotor für eine Windenergieanlage gemäß Anspruch 1 oder Anspruch 4 oder Anspruch 7 oder Anspruch 13.

Der Rotor umfasst das mindestens eine Rotorblatt. Das Rotorblatt ist vorzugsweise mit der Rotorblattwurzel an einer Nabe des Rotors angeordnet. Die Rotorblattwurzel ist der Nabe des Rotors vorzugsweise zugewandt. Die Rotorblattspitze ist der Nabe und/oder einer Rotationsachse des Rotors vorzugsweise abgewandt angeordnet.

Das Rotorblatt erstreckt sich von der Rotorblattwurzel bis zur Rotorblattspitze mit einer Rotorblattlänge. Die einzelnen Positionen entlang des Rotorblatts zwischen der Rotorblattwurzel und der Rotorblattspitze können auch in Prozent mit der sogenannten relativen Rotorblattlänge angegeben werden. Diese in Prozent angegebene Position ergibt sich aus dem Verhältnis von der Beabstandung der Position von der Rotorblattwurzel zu der Rotorblattlänge.

Das Rotorblatt weist ferner die Rotorblatthinterkante und die Rotorblattvorderkante auf. Im Betrieb ist die Rotorblattvorderkante der Windrichtung zugewandt, also nach luv ausgerichtet. Die Rotorblatthinterkante ist im Betrieb vorzugsweise dem Wind abgewandt, also nach lee ausgerichtet. Im Betrieb trifft der Wind somit zunächst auf die Rotorblattvorderkante auf, um dann über das Rotorblattprofil hin zur Rotorblatthinterkante zu strömen. Zwischen der Rotorblattvorderkante und der Rotorblatthinterkante stellt sich die Profiltiefe ein. Die Profiltiefe wird vorzugsweise in direkter Verbindung der Rotorblattvorderkante zu der Rotorblatthinterkante bestimmt. Die Profiltiefe ist vorzugsweise im Wesentlichen orthogonal zu der Richtung der Rotorblattlänge und orthogonal zu einer Dicke des Rotorblatts ausgerichtet.

Die Profiltiefe wird durch das Profilelement um den Vergrößerungsbetrag vergrößert. Das Rotorblatt kann somit eine modifizierte Profiltiefe aufweisen, die sich aus der Beabstandung der Rotorblattvorderkante von der Rotorblatthinterkante, nämlich der Profiltiefe, und dem Vergrößerungsbetrag zusammensetzt. Der Vergrößerungsbetrag ist insbesondere als der Betrag der auskragenden Länge des Profilelements von der Rotorblatthinterkante, bzw. von dem Bereich angrenzend an die Rotorblatthinterkante zu verstehen. Im Profilschnitt ermittelt sich der Vergrößerungsbetrag insbesondere durch die Entfernung eines Wurzelpunktes des Profilelements hin zu einem distalen Ende des Profilelements. Der Wurzelpunkt des Profilelements ist insbesondere an der Rotorblatthinterkante oder im Bereich angrenzend an die Rotorblatthinterkante angeordnet.

Der Rotor weist einen einstellbaren Pitchwinkel auf. Das bedeutet insbesondere, dass das Rotorblatt im Betrieb um eine Längsachse drehbar angeordnet ist, wobei die Längsachse zwischen der Rotorblattwurzel und der Rotorblattspitze ausgerichtet ist. Durch diese drehbare Anordnung kann der Anstellwinkel, und somit auch der Anströmwinkel, verändert werden. Infolgedessen kann das Rotorblatt in Abhängigkeit von der Windgeschwindigkeit hinsichtlich seiner aerodynamischen Leistungsfähigkeit optimal eingesetzt werden. Vorzugsweise umfasst der Rotor eine Nabe, wobei das Rotorblatt an der Nabe rotatorisch um seine Rotorblattlängsachse gelagert ist.

Der Rotor umfasst darüber hinaus die Steuerungseinheit zur Bestimmung eines einzustellenden Pitchwinkels. Die Steuerungseinheit ist derart eingerichtet, dass diese den einzustellenden Pitchwinkel in Abhängigkeit von dem Vergrößerungsbetrag bestimmt. Der einzustellende Pitchwinkel kann von einem, zwei oder mehreren Parametern abhängig sein. Neben dem Vergrößerungsbetrag kann beispielsweise die Windgeschwindigkeit und/oder die Nenndrehzahl und/oder die elektrische Leistung des Rotors als Parameter bei der Bestimmung des einzustellenden Pitchwinkels berücksichtigt werden.

Die Erfinder der vorliegenden Erfindung haben erkannt, dass die Berücksichtigung des vom Profilelement bewirkten Vergrößerungsbetrags ertragssteigernd genutzt werden kann. Bei der Anbringung von Profilelementen können eine Vielzahl von Parametern einen Einfluss auf die aerodynamischen Profilbeiwerte haben, insbesondere die Profilgeometrie selbst, der Neigungswinkel des Profilelements zur Profilsehne sowie die Auskraglänge des Profilelements.

Die Erfinder haben ferner festgestellt, dass bei dem Einsatz von Profilelementen mit einem Vergrößerungsbetrag, der 10 % bis 15 % der Profiltiefe beträgt, die Profilbeiwerte im Wesentlichen unverändert bleiben, wenn die Erhöhung der Profiltiefe durch das Profilelement berücksichtigt wird. Die Profilbeiwerte bleiben über einen weiten Teil des linearen Astes der Profilpolare im Wesentlichen identisch. Erst bei hohen Anstellwinkeln, wenn sich das Rotorblattprofil dem Bereich der Strömungsablösung nähert, unterscheiden sich die Profilbeiwerte des Rotorblatts mit und ohne Profilelement.

Die Erfinder haben insbesondere herausgefunden, dass bei der Anordnung von Profilelementen, insbesondere gezackten Profilelementen, insbesondere Trailing Edge Serrations, der maximale Anstellwinkel, bei dem die Strömungsablösung beginnt, um einen Winkelvergrößerungsbetrag erhöht ist. Beispielsweise kann dieser zwischen 0,5 Bogengrad und 1 Bogengrad liegen. Die Anbringung des Profilelements an der Rotorblatthinterkante hat somit eine stabilisierende Wirkung auf die Profilumströmung, sodass etwaige Strömungsablösungen erst bei höherem Anstellwinkel auftreten. Durch die Anordnung des Profilelements, das zur Vergrößerung der Profiltiefe beiträgt, weist das Rotorblatt ferner eine erhöhte axiale Induktion auf.

Neben der Erhöhung der axialen Induktion, hat das Profilelement darüber hinaus einen Einfluss auf den lokal am Rotorblatt anliegenden Anstellwinkel. Lokal am Rotorblatt bedeutet insbesondere, dass an den unterschiedlichen Profilschnitten entlang der Rotorblattlänge unterschiedliche Anstellwinkel, die durch das Profilelement beeinflusst werden, vorliegen können. Die Erfinder haben festgestellt, dass die lokalen Anstellwinkel umso kleiner sind, je größer der Vergrößerungsbetrag ist. Es wurde darüber hinaus erkannt, dass die Verringerung des lokalen Anstellwinkels auch in Bereichen festzustellen ist, in denen kein Profilelement angeordnet ist, beispielsweise in einem Bereich angrenzend an einen Bereich mit einem bzw. dem Profilelement, der der Nabe zugewandt ist.

Der Vergrößerungsbetrag des Profilelements führt dazu, dass Anstellwinkelreserven vorliegen. Dies bedeutet insbesondere, dass der maximal zulässige Anstellwinkel erhöht wird, und im Bereich unter dem maximal zulässigen Anstellwinkel geringere Anstellwinkel vorgesehen werden können, beispielsweise durch eine entsprechende Einstellung des Pitchwinkels, als dies bei Rotorblättern ohne Profilelement der Fall wäre. Durch die Veränderung des lokalen Anstellwinkels durch das Profilelement, kann der Anstellwinkel bei gleicher Windgeschwindigkeit im Vergleich zu Rotorblättern ohne Profilelement verändert werden. Insbesondere kann der Pitchwinkel geringer ausfallen.

Der Pitchwinkel kann umso geringer gewählt werden, je mehr die lokalen Anstellwinkel durch den Vergrößerungsbetrag des Profilelements zuvor verringert wurden. Durch die Pitchwinkelverringerung werden die Erträge und die Lasten an der Anlage erhöht. Die Steuerungseinheit zur Bestimmung des einzustellenden Pitchwinkels unter Berücksichtigung des Vergrößerungsbetrags führt zu einer ertragsoptimierten Windenergieanlage. Der Verlauf des Pitchwinkels über die Windgeschwindigkeit kann somit an den Vergrößerungsbetrag angepasst werden.

Ein einstellbarer Pitchwinkel bedeutet insbesondere, dass das Rotorblatt um seine von der Rotorblattwurzel zur Rotorblattspitze verlaufenden Längsachse rotatorisch bewegbar ist. Vorzugsweise umfasst der Rotor mindestens einen Pitchverstellmotor zur rotatorischen Verstellung des Rotorblatts relativ zur Nabe. Der Pitchverstellmotor weist vorzugsweise eine mit einem Ritzel gekoppelte Abtriebswelle und das Rotorblatt eine Verzahnung auf, die derart angeordnet sind, dass das Ritzel mit der Verzahnung des Rotorblatts kämmt.

Die Steuerungseinheit weist vorzugsweise eine Speichereinheit auf, wobei in der Speichereinheit der Vergrößerungsbetrag hinterlegt ist. Die Steuerungseinheit ist vorzugsweise eingerichtet, den Pitchwinkel des Rotorblattes einzustellen. Ferner vorzugsweise ist die Steuerungseinheit mit einem, zwei oder mehreren Pitchverstellmotoren gekoppelt, wobei die Pitchverstellmotoren angeordnet und ausgebildet sind, einen Pitchwinkel des Rotorblattes einzustellen. Hierfür können die Pitchverstellmotoren beispielsweise fest an der Nabe des Rotors angeordnet sein, und mit einem Ritzel in eine Verzahnung des Rotorblattes eingreifen. Das Rotorblatt ist vorzugsweise rotatorisch an der Nabe gelagert, beispielsweise mit einem Wälzlager.

Die Steuerungseinheit kann beispielsweise mit den Pitchverstellmotoren signaltechnisch gekoppelt sein. Die signaltechnische Kopplung kann drahtgebunden oder drahtlos ausgebildet sein. Die Steuerungseinheit kann darüber hinaus mit einem Sensorsystem signaltechnisch gekoppelt sein. Dieses Sensorsystem kann beispielsweise die Windrichtung und/oder die Windgeschwindigkeit erfassen und der Steuerungseinheit zur Verfügung stellen, insbesondere mittels eines Windsignals. Das Windsignal wird von dem Sensorsystem bereitgestellt, das heißt insbesondere, dass dieses an die Steuerungseinheit gesendet werden kann oder die Steuerungseinheit auf das Windsignal zugreifen kann.

Die Steuerungseinheit kann innerhalb des Rotors, beispielsweise in der Nabe und/oder in dem Rotorblatt angeordnet sein. Darüber hinaus kann die Steuerungseinheit entfernt von dem Rotor angeordnet sein, beispielsweise in einem Maschinenhaus einer Windenergieanlage oder einem Steuerungssystem eines Windparks, der vorzugsweise zwei oder mehr Windenergieanlagen umfasst.

In einer bevorzugten Ausführungsvariante des Rotors ist vorgesehen, dass die Steuerungseinheit eingerichtet ist, den einzustellenden Pitchwinkel in Abhängigkeit von zwei oder mehr Vergrößerungsbeträgen und/oder von einem Verlauf des Vergrößerungsbetrags zu bestimmen.

Der Vergrößerungsbetrag des Profilelements kann sich entlang der Rotorblattlänge verändern. Beispielsweise kann das Profilelement an einer ersten Position entlang der Rotorblattlänge mit einem ersten Vergrößerungsbetrag auskragen und an einer von der ersten Position verschiedenen zweiten Position mit einem zweiten Vergrößerungsbetrag auskragen. Der erste Vergrößerungsbetrag ist vorzugsweise von dem zweiten Vergrößerungsbetrag verschieden. Darüber hinaus kann der Vergrößerungsbetrag an unterschiedlichen Positionen der Rotorblattlänge unterschiedlich sein, sodass sich ein Verlauf des Vergrößerungsbetrags einstellt. Dieser Verlauf des Vergrößerungsbetrags kann stetig und/oder unstetig ausgebildet sein.

Gemäß einer weiteren bevorzugten Ausführungsvariante ist vorgesehen, dass die Steuerungseinheit eingerichtet ist, den einzustellenden Pitchwinkel in mittelbarer oder unmittelbarer Abhängigkeit von dem Vergrößerungsbetrag zu bestimmen.

Eine unmittelbare Abhängigkeit von dem Vergrößerungsbetrag liegt insbesondere dann vor, wenn die Steuerungseinheit den Vergrößerungsbetrag zur Bestimmung insbesondere zur Berechnung des einzustellenden Pitchwinkels nutzt. Eine mittelbare Abhängigkeit von dem Vergrößerungsbetrag liegt insbesondere vor, wenn beispielsweise eine Größe, die von dem Vergrößerungsbetrag beeinflusst wird, für die Bestimmung des einzustellenden Pitchwinkels genutzt wird.

Ferner ist es bevorzugt, dass die Steuerungseinheit eingerichtet ist, den einzustellenden Pitchwinkel in mittelbarer oder unmittelbarer Abhängigkeit von den zwei oder mehr Vergrößerungsbeträgen und/oder von einem Verlauf des Vergrößerungsbetrags zu bestimmen.

In einer bevorzugten Fortbildung des Rotors ist vorgesehen, dass die Steuerungseinheit eingerichtet ist, einen Induktionsfaktor, eine Windgeschwindigkeit in der Rotorblattebene, wenigstens einen lokalen Anstellwinkel und/oder eine Luftdichte bei der Bestimmung des Pitchwinkels zu berücksichtigen.

Die Steuerungseinheit kann als eigenständige Steuerungseinheit des Rotors oder als Teil der Anlagensteuerung der Windenergieanlage, zu welcher der Rotor gehört, ausgeführt sein. Auch können Funktionalitäten der Steuerungseinheit vollständig oder teilweise von dem Rotor entfernt, beispielsweise auf einem Server implementiert sein.

Die Berücksichtigung des Induktionsfaktors, der Windgeschwindigkeit in der Rotorblattebene und/oder des wenigstens einen, lokalen Anstellwinkels bei der Bestimmung des Pitchwinkels erfolgt vorzugsweise bei Bestimmung des einzustellenden Pitchwinkels in mittelbarer Abhängigkeit von dem Vergrößerungsbetrag. Wie im Vorherigen bereits erläutert, führt der Vergrößerungsbetrag zu einer größeren modifizierten Profiltiefe. Eine höhere Profiltiefe führt zu einer geringeren Windgeschwindigkeit in der Rotorblattebene, da dem Wind eine höhere Widerstandsfläche entgegentritt. Eine geringere Windgeschwindigkeit in der Rotorblattebene führt definitionsgemäß zu einer höheren Induktion, da sich der Induktionsfaktor a durch die folgende Gleichung ermittelt $a = 1 - \frac{u_2}{u_1}$, wobei $u_2$ die Windgeschwindigkeit in der

Rotorblattebene und $u_1$ die Windgeschwindigkeit weit vor der Rotorblattebene darstellt. Bei gleicher Umfangsgeschwindigkeit führt die geringere Windgeschwindigkeit zu einem niedrigeren Anstellwinkel. Infolgedessen können der Induktionsfaktor, die Windgeschwindigkeit in der Rotorblattebene und der lokale Anstellwinkel als mittelbare Faktoren des Vergrößerungsbetrags verstanden werden.

Gemäß einer weiteren bevorzugten Fortbildung des Rotors ist vorgesehen, dass das Rotorblatt einen maximalen Anstellwinkel aufweist, der durch eine im Wesentlichen ablösungsfreie Umströmung des Rotorblatts gekennzeichnet ist, und die Steuerungseinheit eingerichtet ist, den durch das wenigstens eine Profilelement erhöhten maximalen Anstellwinkel bei der Bestimmung des einzustellenden Pitchwinkels zu berücksichtigen.

Die im Wesentlichen ablösungsfreie Umströmung des Rotorblatts kann in einem Polardiagramm des Rotorblatts ermittelt werden, wobei in dem Polardiagramm der Auftriebsbeiwert über den Anstellwinkel aufgetragen ist. Der maximale Anstellwinkel, an dem noch eine im Wesentlichen ablösungsfreie Umströmung des Rotorblatts anliegt, kann im Polardiagramm dort abgelesen werden, wo der Auftriebsbeiwert ein globales Maximum erreicht. Bei Überschreiten des maximalen Anstellwinkels erfolgt eine Strömungsablösung und der Auftriebsbeiwert verringert sich. Wie im Vorherigen bereits erläutert, kann das Profilelement zu einer Erhöhung des maximalen Anstellwinkels führen. Die Steuerungseinheit ist bevorzugt eingerichtet, den erhöhten maximalen Anstellwinkel bei der Bestimmung des einzustellenden Pitchwinkels zu berücksichtigen.

Gemäß einer weiteren bevorzugten Fortbildung des Rotors ist vorgesehen, dass die Steuerungseinheit dazu eingerichtet ist, den einzustellenden Pitchwinkel derart zu steuern, dass sich eine Anstellwinkelreserve des Rotorblattes im Wesentlichen unabhängig von dem Vergrößerungsbetrag einstellt, wobei die Anstellwinkelreserve als Winkel zwischen einem maximalen Anstellwinkel, der durch eine im Wesentlichen ablösungsfreie Umströmung des Rotorblatts gekennzeichnet ist, und einem auf Grundlage der Einstellung des Pitchwinkels aktuell anliegenden Anstellwinkels definiert ist.

Es ist ferner bevorzugt, dass die Steuerungseinheit dazu eingerichtet ist, den Pitchwinkel unter Berücksichtigung eines durch das Profilelement erhöhten maximalen Anstellwinkels und/oder eines erhöhten Strömungsabrisswinkels einzustellen. Darüber hinaus ist es bevorzugt, dass die Steuereinheit zur Bestimmung des Pitchwinkels Auslegungslasten der Windenergieanlage berücksichtigt, wobei vorzugsweise die Steuerungseinheit eingerichtet ist, Betriebslasten der Windenergieanlage mit den Auslegungslasten zu vergleichen.

Durch das Profilelement und den Vergrößerungsbetrag erhöhen sich üblicherweise die Lasten an dem Rotor und in der Regel auch an weiteren Komponenten der Windenergieanlage. Diese erhöhten Lasten sollten die Auslegungslasten der Windenergieanlage nicht, oder zumindest nicht zu häufig, oder nicht dauerhaft, überschreiten. Durch die Berücksichtigung der Auslegungslasten und der tatsächlich an dem Rotor anliegenden Lasten, kann die Überschreitung der Auslegungslasten vermindert oder beseitigt werden, sodass Beschädigungen an dem Rotor und/oder an der Windenergieanlage vermieden werden können.

Gemäß einer weiteren bevorzugten Fortbildung ist vorgesehen, dass der Vergrößerungsbetrag kleiner gleich 20 %, vorzugsweise kleiner gleich 15 %, insbesondere kleiner gleich 10 % der Profiltiefe beträgt. Die sich zwischen der Rotorblattvorderkante und der Rotorblatthinterkante einstellende Profiltiefe kann beispielsweise 200 cm betragen. Wenn der Vergrößerungsbetrag 10 % der Profiltiefe beträgt, ist in diesem Beispiel der Vergrößerungsbetrag 20 cm. Die Auskraglänge des Profilelements beträgt dann beispielsweise 20 cm. Sollte der Vergrößerungsbetrag mit 5 % gewählt sein, würde der Vergrößerungsbetrag 10 cm betragen und das Profilelement um 10 cm auskragen.

In einer weiteren bevorzugten Fortbildung des Rotors ist vorgesehen, dass sich das wenigstens eine Profilelement zumindest abschnittsweise über die Rotorblattlänge erstreckt.

Ferner ist es bevorzugt, dass das wenigstens eine Profilelement in einem Bereich zwischen 70 % und 100 % einer relativen Rotorblattlänge angeordnet ist. Profilelemente werden insbesondere in einem Bereich angrenzend an die Blattspitze angeordnet, um dort Geräuschemissionen zu vermindern oder zu beseitigen. Insbesondere werden Profilelemente in einem Bereich zwischen 70 % und 100 % der relativen Rotorblattlänge angeordnet, der somit an die Rotorblattspitze angrenzt und sich beispielsweise mit 30 % der Rotorblattlänge in Richtung der Rotorblattwurzel erstreckt.

Eine weitere bevorzugte Fortbildung des Rotors sieht vor, dass ein distaler Abschnitt des wenigstens einen Profilelements einen gezackten Verlauf aufweist.

Das Profilelement erstreckt sich im Profilschnitt vorzugsweise von einem Wurzelende hin zu einem distalen Ende. Das Wurzelende grenzt an die Hinterkante oder einen Bereich angrenzend an die Hinterkante an. Das distale Ende ist das Ende des Profilelements, das der Hinterkante abgewandt ist. Der distale Abschnitt grenzt an das distale Ende an. Dieser distale Abschnitt hat in dieser bevorzugten Ausführungsvariante einen gezackten Verlauf. Dieser gezackte Verlauf zeichnet sich durch geringe Geräuschemissionen aus.

Gemäß einer weiteren bevorzugten Fortbildung des Rotors ist vorgesehen, dass ein distaler Abschnitt des wenigstens einen Profilelements einen trapezförmigen Verlauf aufweist.

Eine weitere bevorzugte Ausführungsvariante sieht vor, dass das Profilelement verstellbar ist, sodass zumindest ein erster Vergrößerungsbetrag und ein zweiter Vergrößerungsbetrag einstellbar ist, wobei der erste Vergrößerungsbetrag kleiner ist als der zweite Vergrößerungsbetrag, und vorzugsweise die Steuerungseinheit eingerichtet ist, bei Einstellung des zweiten Vergrößerungsbetrags einen kleineren Pitchwinkel zu bestimmen als bei Einstellung des ersten Vergrößerungsbetrags. Ferner vorzugsweise ist die Steuerungseinheit eingerichtet, den Pitchwinkel umso kleiner zu bestimmen und/oder einzustellen, je größer der Vergrößerungsbetrag ist.

Gemäß einem weiteren Aspekt der vorliegenden Erfindung wird die eingangs genannte Aufgabe gelöst durch eine Windenergieanlage umfassend einen Rotor nach einer der im Vorherigen beschriebenen Ausführungsvarianten. Die Steuerungseinheit kann in dem Rotor, insbesondere in einer Nabe des Rotors, angeordnet sein. Darüber hinaus kann es bevorzugt sein, dass die Steuerungseinheit in einem Maschinenhaus und/oder einem Turm der Windenergieanlage angeordnet ist. Die Steuerungseinheit kann darüber hinaus auch an anderen Einrichtungen der Windenergieanlage angeordnet sein. Darüber hinaus kann die Steuerungseinheit auch außerhalb der Windenergieanlage, beispielsweise in einem Steuerungssystem eines Windparks, angeordnet sein.

Gemäß einem weiteren Aspekt der vorliegenden Erfindung wird die eingangs genannte Aufgabe gelöst durch ein Verfahren zur Ertragssteigerung eines Rotors einer Windenergieanlage gemäß Anspruch 15.

Das Verfahren und seine möglichen Fortbildungen weisen Merkmale bzw. Verfahrensschritte auf, die sie insbesondere dafür geeignet machen, für einen Rotor und seine Fortbildungen verwendet zu werden. Für weitere Vorteile, Ausführungsvarianten und Ausführungsdetails der Windenergieanlage und des Verfahrens zur Ertragssteigerung und ihrer jeweiligen möglichen Fortbildungen, wird auch auf die zuvor erfolgte Beschreibung zu den entsprechenden Merkmalen und Fortbildungen des Rotors verwiesen.

Bevorzugte Ausführungsbeispiele werden exemplarisch anhand der beiliegenden Figuren erläutert.

Es zeigen:

    Fig. 1: eine schematische Ansicht einer Windenergieanlage;
    Fig. 2: eine schematische Ansicht eines Rotorblattes;
    Fig. 3: eine schematische Ansicht eines Teilabschnitts einer Rotorblatthinterkante;
    Fig. 4: eine weitere schematische Ansicht eines Teilabschnitts einer Rotorblatthinterkante;
    Fig. 5: schematische Teilansichten von Profilelementen;
    Fig. 6: schematische Verläufe von axialen Induktionsfaktoren;
    Fig. 7: schematische Verläufe von Anstellwinkeln
    Fig. 8: schematisch ein Flussdiagramm eines Verfahrens.

In den Figuren sind funktionsgleiche bzw. funktionsähnliche Elemente mit den gleichen Bezugszeichen versehen.

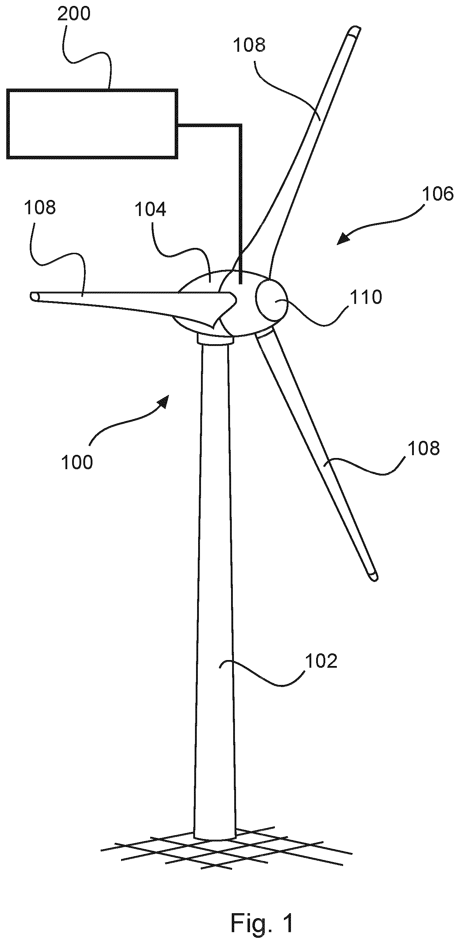

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugte elektrische Energie.

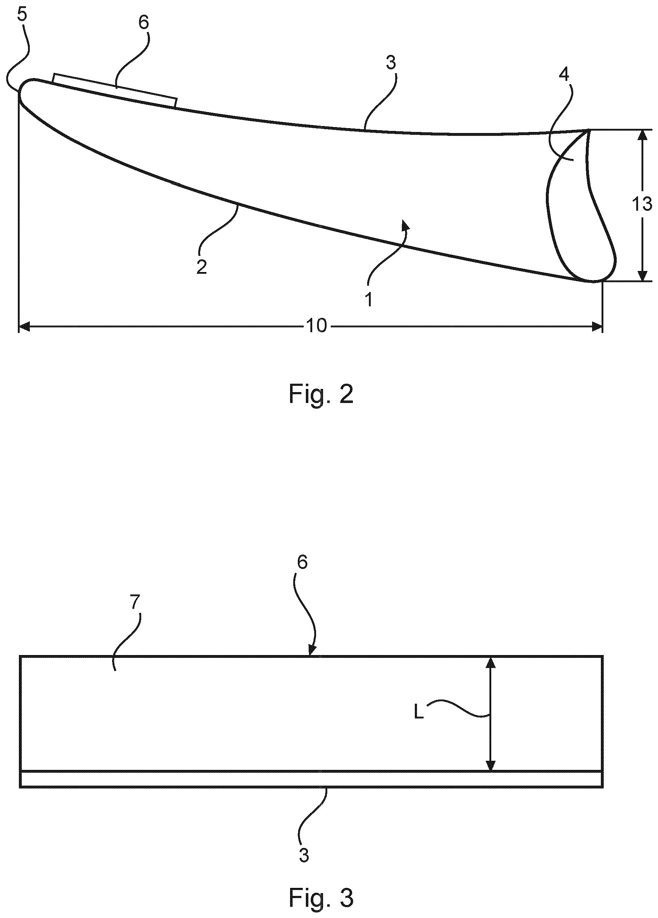

Die Pitchwinkel der Rotorblätter 108 können durch Pitchmotoren an der Rotorblattwurzel der jeweiligen Rotorblätter 108 verändert werden. Die Rotorblätter 108 weisen jeweils eine Rotorblattwurzel und eine Rotorblattspitze auf zwischen denen sich die Rotorblätter 108 mit einer Rotorblattlänge erstrecken. Darüber hinaus weisen die Rotorblätter 108 jeweils eine sich über die Rotorblattlänge erstreckende Rotorblatthinterkante und/oder Blattvorderkante auf. Zwischen der Rotorblattvorderkante und der Rotorblatthinterkante stellt sich jeweils eine Profiltiefe ein. Zur Steuerung der Pitchwinkel der Rotorblätter 108 ist eine Steuerungseinheit 200 vorgesehen, die als separate Steuerungseinheit 200 des Pitchwinkels der Rotorblätter 108 oder als Teil der Steuerung der Windenergieanlage 100 ausgeführt sein kann. Fig. 2 zeigt eine schematische Ansicht eines Rotorblattes 1, das ein Beispiel eines der Rotorblätter 108, die in Fig. 1 gezeigt sind, ist. Das Rotorblatt 1 erstreckt sich von einer Rotorblattwurzel 4 hin zu einer Rotorblattspitze 5, sodass sich eine Rotorblattlänge 10 einstellt. Im Wesentlichen orthogonal zu der Rotorblattlänge 10, erstreckt sich das Rotorblatt 1 von einer Rotorblattvorderkante 2 hin zu einer Rotorblatthinterkante 3. Zwischen der Rotorblattvorderkante 2 und der Rotorblatthinterkante 3 stellt sich eine Profiltiefe 13 ein. An der Rotorblatthinterkante 3 ist schematisch dargestellt ein Profilelement 6 angeordnet, das von der Rotorblatthinterkante 3 auskragt.

Fig. 3 zeigt eine schematische Ansicht eines Teilabschnitts einer Rotorblatthinterkante 3. Das Profilelement 6 ist zumindest in einem Teilabschnitt der Rotorblatthinterkante 3 angeordnet. Das gezeigte Profilelement 6 weist einen durchgängigen Profilabschnitt 7 auf. Das Profilelement 6 kragt von der Rotorblatthinterkante 3 aus. Die Auskraglänge ist vorliegend der Vergrößerungsbetrag L.

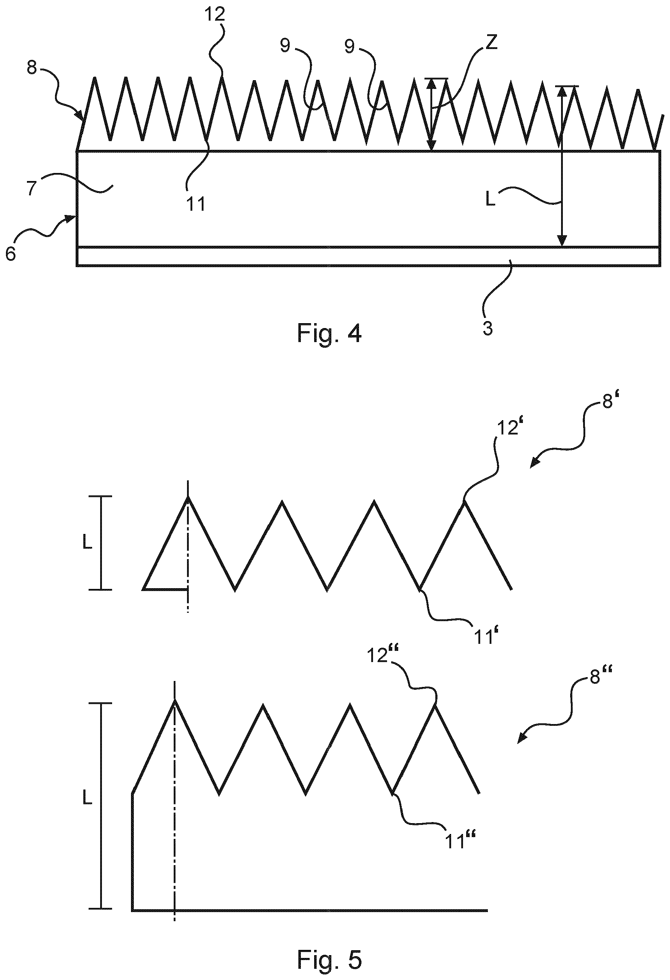

Fig. 4 zeigt eine weitere schematische Teilansicht einer Rotorblatthinterkante. Das hier gezeigte Profilelement 6 weist neben einem durchgängigen Profilabschnitt 7 einen gezackten Profilabschnitt 8 auf. Der Vergrößerungsbetrag L summiert sich aus der Auskraglänge des durchgängigen Profilabschnitts 7 und der Auskraglänge des gezackten Profilabschnitts 8, wobei die Auskragung bis hin zu den Zackenspitzen 12 berücksichtigt wird. Die Zacken 9 des gezackten Profilabschnitts 8 weisen jeweils einen Zackengrund 11 und die im Vorherigen bereits genannte Zackenspitze 12 auf. Zwischen dem Zackengrund und der Zackenspitze 12 erstreckt sich eine Zacke mit einer Zackenhöhe Z.

Fig. 5 zeigt schematische Teilansichten von Profilelementen. Der gezackte Profilabschnitt 8' weist Zacken auf, die sich von einem Zackengrund 11' hin zu einer Zackenspitze 12' erstrecken. Der gezackte Profilabschnitt 8' weist gleichförmig nebeneinander angeordnete Zacken auf. Der gezackte Profilabschnitt 8" weist stiftförmige Zacken auf, die sich durch einen rechteckigen Abschnitt und einen daran angeordneten zackenförmigen Abschnitt auszeichnen. Die Zacken weisen einen Zackengrund 11" und eine Zackenspitze 12" auf.

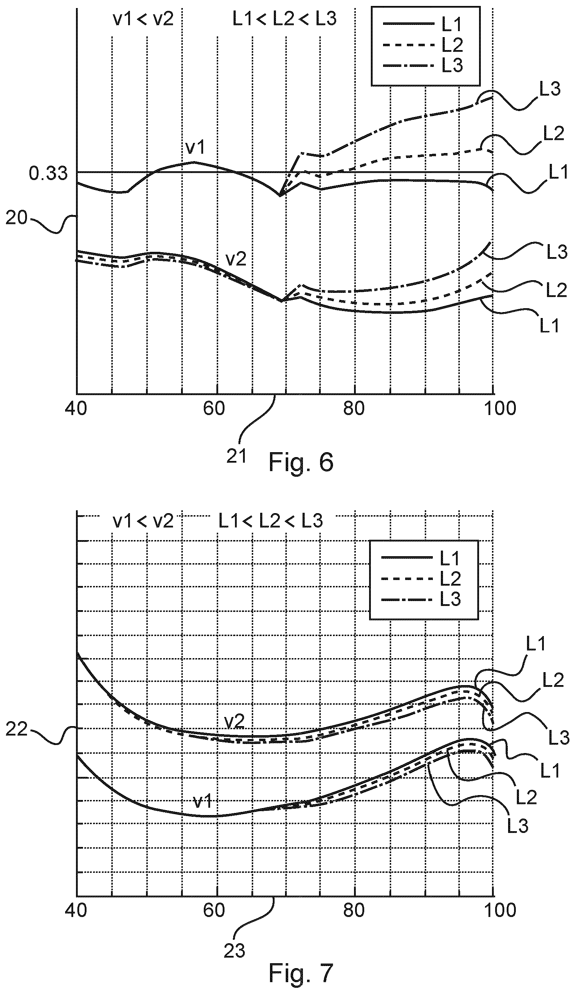

Fig. 6 zeigt schematische Verläufe von axialen Induktionsfaktoren. Auf der Abszisse ist die relative Rotorblattlänge 21 aufgetragen. Auf der Ordinate ist der axiale Induktionsfaktor 20 aufgetragen. Als Konstante ist der axiale Induktionsfaktor 0,33 eingetragen, der auch als Betz'sches Optimum bezeichnet wird. Insgesamt sind sechs verschiedene Kurven in dem Diagramm dargestellt. Drei Kurven sind für eine erste Windgeschwindigkeit v1 und drei weitere Kurven für eine zweite Windgeschwindigkeit v2 dargestellt. Die erste Windgeschwindigkeit v1 ist geringer als die zweite Windgeschwindigkeit v2.

Für jede Windgeschwindigkeit ist der jeweils an einer relativen Rotorblattposition anliegende axiale Induktionsfaktor für jeweils drei verschiedene Vergrößerungsbeträge aufgezeigt. Es werden also für zwei unterschiedliche Windgeschwindigkeiten die Induktionsfaktoren entlang der Rotorblattlänge für ein erstes Profilelement mit einem Vergrößerungsbetrag L1, für ein zweites Profilelement mit einem Vergrößerungsbetrag L2 und für ein drittes Profilelement mit dem Vergrößerungsbetrag L3 aufgezeigt. In dem Diagramm sind die zu den unterschiedlichen Vergrößerungsbeträgen korrespondierenden Kurven mit L1, L2 und L3 bezeichnet.

Die Profilelemente sind zwischen 70 % und 100 % der relativen Rotorblattlänge angebracht. Es ist ersichtlich, dass mit größerem Vergrößerungsbetrag eine größere axiale Induktion bzw. eine höherer axialer Induktionsfaktor 20 erreicht wird. Bei der geringen Windgeschwindigkeit v1 führt dies bei einem Vergrößerungsbetrag L2 und L3 zu einer Überinduktion. Folglich kann beispielsweise bei der Windgeschwindigkeit v1 der Anstellwinkel für ein Profilelement mit einem ersten und zweiten Vergrößerungsbetrag verringert werden, sodass wieder das Betz'sche Optimum bei 0,33 erreicht werden kann.

Fig. 7 zeigt schematische Verläufe von Anstellwinkeln. Auf der Abszisse ist wiederum die relative Rotorblattlänge 23 aufgetragen und auf der Ordinate ist der lokal anliegende Anstellwinkel 22 aufgetragen. Es ist ersichtlich, dass mit steigender Länge der Profilelemente, was vorliegend durch die Vergrößerungsbeträge L1-L3 dargestellt ist, ein niedrigerer lokaler Anstellwinkel erreicht wird. Dies wird dadurch bewirkt, dass durch ein längeres Profilelement mit einem größeren Vergrößerungsbetrag eine stärkere Verringerung der Windgeschwindigkeit in der Rotorebene erreicht wird, sodass sich unter Berücksichtigung der Umfangsgeschwindigkeit ein geringerer lokaler Anstellwinkel einstellt.

Bei der zweiten Windgeschwindigkeit v2 ist darüber hinaus zu erkennen, dass der Einfluss der zwischen 70 % und 100 % angeordneten Profilelemente auch auf den Bereich wirkt, in dem kein Profilelement angeordnet ist, hier nämlich im Bereich zwischen 40 % und 70 % der relativen Rotorblattlänge.

Durch die hier gezeigten Zusammenhänge zwischen der Induktion und dem Vergrößerungsbetrag des Profilelements wird ersichtlich, dass die Berücksichtigung des Vergrößerungsbetrags bei der Bestimmung eines optimalen Pitchwinkels durch die Steuerungseinheit 200 wünschenswert ist. Infolgedessen kann die aerodynamische Leistung des Rotors verbessert werden und der Ertrag der Windenergieanlage verbessert werden.

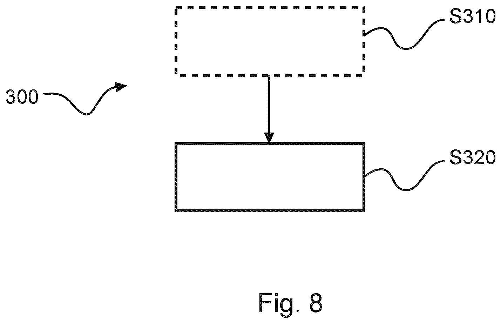

Fig. 8 zeigt schematisch ein Flussdiagramm eines Verfahrens 300 zur Ertragssteigerung eines Rotors, beispielsweise des oben beschriebenen Rotors 106 der Windenergieanlage 100.

In einem Schritt S310 wird ein Profilelement, beispielsweise ein oben beschriebenes Profilelement 6, zur Vergrößerung der Profiltiefe um wenigstens einen Vergrößerungsbetrag L angeordnet. Der Schritt S310 ist in dem Verfahren 300 optional und kann beispielsweise auch bereits bei der Montage der Windenergieanlage ausgeführt werden. Alternativ ist auch der Tausch eines Profilelements und das Anpassen des Vergrößerungsbetrages L, beispielsweise im Rahmen einer Wartung der Windenergieanlage, mit diesem Schritt beschrieben.

In einem Schritt S320 wird der einzustellende Pitchwinkel in Abhängigkeit von dem Vergrößerungsbetrag L des in Schritt S310 angeordneten Profilelementes bestimmt. Die derartige Regelung der Windenergieanlage ermöglicht wie beschrieben einen ertragsoptimierten Betrieb der Windenergieanlage.

Ferner kann das Verfahren einen Schritt umfassen, der eine Veränderung des Vergrößerungsbetrags L während des Betriebs umfasst. Die Veränderung des Vergrößerungsbetrags L kann beispielsweise durch ein bewegbares und/oder ausfahrbares Profilelement ermöglicht werden. Hierfür kann ein Aktor vorgesehen sein.

BEZUGSZEICHEN

| 1 | Rotorblatt |
|---|---|
| 2 | Rotorblattvorderkante |
| 3 | Rotorblatthinterkante |
| 4 | Rotorblattwurzel |
| 5 | Rotorblattspitze |
| 6 | Profilelement |
| 7 | durchgängiger Profilabschnitt |
| 8 | gezackter Profilabschnitt |
| 9 | Zacken |
| 10 | Rotorblattlänge |
| 11 | Zackengrund |
| 12 | Zackenspitze |
| 20 | axialer Induktionsfaktor |
| 21, 23 | relative Rotorblattlänge |
| 22 | Anstellwinkel |
| 100 | Windenergieanlage |
| 102 | Turm |
| 104 | Gondel |
| 106 | Rotor |
| 108 | Rotorblätter |
| 110 | Spinner |
| 200 | Steuerungseinheit |
| 300 | Verfahren |
| S310 | Anordnen eines Profilelementes |
| S320 | Bestimmen des Pitchwinkels |
| L | Vergrößerungsbetrag |
| Z | Zackenhöhe |

**Patentansprüche**

1. Rotor (106) für eine Windenergieanlage (100) umfassend mindestens ein Rotorblatt (1, 108), mit

   - einer sich zwischen Rotorblattwurzel (4) und Rotorblattspitze (5) über eine Rotorblattlänge (10) ersteckenden Rotorblatthinterkante (3) und Rotorblattvorderkante (2),
   - einer sich zwischen der Rotorblattvorderkante (2) und der Rotorblatthinterkante (3) einstellenden Profiltiefe,
   - einem einstellbaren Pitchwinkel,
   - wobei das Rotorblatt (1, 108) wenigstens ein Profilelement (6) aufweist, das an der Rotorblatthinterkante (3) oder im Bereich angrenzend an die Rotorblatthinterkante (3) zur Vergrößerung der Profiltiefe um einen Vergrößerungsbetrag (L1, L2, L3) angeordnet ist,
   - **gekennzeichnet durch** eine Steuerungseinheit (200) zur Bestimmung eines einzustellenden Pitchwinkels, die eingerichtet ist, den einzustellenden Pitchwinkel in Abhängigkeit von dem Vergrößerungsbetrag (L1, L2, L3) zu bestimmen, wobei das wenigstens eine Profilelement (6) in einem Bereich zwischen 70 % und 100 % einer relativen Rotorblattlänge (10) angeordnet ist.

2. Rotor (106) gemäß Anspruch 1, **dadurch gekennzeichnet, dass** die Steuerungseinheit (200) eingerichtet ist, den einzustellenden Pitchwinkel in Abhängigkeit von zwei oder mehr Vergrößerungsbeträgen (L1, L2, L3) und/oder von einem Verlauf des Vergrößerungsbetrags zu bestimmen.

3. Rotor (106) nach einem der vorherigen Ansprüche, **dadurch gekennzeichnet, dass** die Steuerungseinheit (200) eingerichtet ist, den einzustellenden Pitchwinkel in mittelbarer Abhängigkeit von dem Vergrößerungsbetrag zu bestimmen.

4. Rotor (106) für eine Windenergieanlage (100) umfassend mindestens ein Rotorblatt (1, 108), mit

   - einer sich zwischen Rotorblattwurzel (4) und Rotorblattspitze (5) über eine Rotorblattlänge (10) ersteckenden Rotorblatthinterkante (3) und Rotorblattvorderkante (2),
   - einer sich zwischen der Rotorblattvorderkante (2) und der Rotorblatthinterkante (3) einstellenden Profiltiefe,
   - einem einstellbaren Pitchwinkel,
   - wobei das Rotorblatt (1, 108) wenigstens ein Profilelement (6) aufweist, das an der Rotorblatthinterkante (3) oder im Bereich angrenzend an die Rotorblatthinterkante (3) zur Vergrößerung der Profiltiefe um einen Vergrößerungsbetrag (L1, L2, L3) angeordnet ist,
   - **gekennzeichnet durch** eine Steuerungseinheit (200) zur Bestimmung eines einzustellenden Pitchwinkels, die eingerichtet ist, den einzustellenden Pitchwinkel in unmittelbarer Abhängigkeit von dem Vergrößerungsbetrag (L1, L2, L3) zu bestimmen.

5. Rotor (106) nach einem der vorherigen Ansprüche, **dadurch gekennzeichnet, dass** die Steuerungseinheit (200) eingerichtet ist, einen Induktionsfaktor, eine Windgeschwindigkeit in der Rotorblattebene, wenigstens einen lokalen Anstellwinkel und/oder eine Luftdichte bei der Bestimmung des Pitchwinkels zu berücksichtigen.

**6.** Rotor (106) nach einem der vorherigen Ansprüche,

**dadurch gekennzeichnet, dass** das Rotorblatt (1, 108) einen maximalen Anstellwinkel aufweist, der durch eine im Wesentlichen ablösungsfreie Umströmung des Rotorblatts (1, 108) gekennzeichnet ist, und

die Steuerungseinheit (200) eingerichtet ist, den durch das wenigstens eine Profilelement (6) erhöhten maximalen Anstellwinkel bei der Bestimmung des einzustellenden Pitchwinkels zu berücksichtigen.

**7.** Rotor (106) für eine Windenergieanlage (100) umfassend mindestens ein Rotorblatt (1, 108), mit

- einer sich zwischen Rotorblattwurzel (4) und Rotorblattspitze (5) über eine Rotorblattlänge (10) ersteckenden Rotorblatthinterkante (3) und Rotorblattvorderkante (2),
- einer sich zwischen der Rotorblattvorderkante (2) und der Rotorblatthinterkante (3) einstellenden Profiltiefe,
- einem einstellbaren Pitchwinkel,
- wobei das Rotorblatt (1, 108) wenigstens ein Profilelement (6) aufweist, das an der Rotorblatthinterkante (3) oder im Bereich angrenzend an die Rotorblatthinterkante (3) zur Vergrößerung der Profiltiefe um einen Vergrößerungsbetrag (L1, L2, L3) angeordnet ist,

**gekennzeichnet durch** eine Steuerungseinheit (200) zur Bestimmung eines einzustellenden Pitchwinkels, die eingerichtet ist, den einzustellenden Pitchwinkel in Abhängigkeit von dem Vergrößerungsbetrag (L1, L2, L3) zu bestimmen und den einzustellenden Pitchwinkel derart zu steuern, dass sich eine Anstellwinkelreserve des Rotorblattes (1, 108) im Wesentlichen unabhängig von dem Vergrößerungsbetrag (L1, L2, L3) einstellt, wobei die Anstellwinkelreserve als Winkel zwischen einem maximalen Anstellwinkel, der durch eine im Wesentlichen ablösungsfreie Umströmung des Rotorblatts (1, 108) gekennzeichnet ist, und einem auf Grundlage der Einstellung des Pitchwinkels aktuell anliegenden Anstellwinkels definiert ist.

**8.** Rotor (106) nach Anspruch 7, **dadurch gekennzeichnet, dass** die Steuerungseinheit (200) dazu eingerichtet ist, den Pitchwinkel unter Berücksichtigung eines durch das Profilelement (6) erhöhten maximalen Anstellwinkels und/oder eines erhöhten Strömungsabrisswinkels einzustellen.

**9.** Rotor (106) nach einem der vorherigen Ansprüche, **dadurch gekennzeichnet, dass** die Steuereinheit (200) zur Bestimmung des Pitchwinkels Auslegungslasten der Windenergieanlage (100) berücksichtigt, wobei vorzugsweise die Steuerungseinheit eingerichtet ist, Betriebslasten der Windenergieanlage (100) mit den Auslegungslasten zu vergleichen.

**10.** Rotor (106) nach einem der vorherigen Ansprüche, **dadurch gekennzeichnet, dass** der Vergrößerungsbetrag (L1, L2, L3) kleiner gleich 20 %, vorzugsweise kleiner gleich 15 %, insbesondere kleiner gleich 10 %, der Profiltiefe beträgt.

**11.** Rotor (106) nach einem der vorherigen Ansprüche, **dadurch gekennzeichnet, dass** sich das wenigstens eine Profilelement (6) zumindest abschnittsweise über die Rotorblattlänge (10) erstreckt.

**12.** Rotor (106) nach einem der vorherigen Ansprüche, **dadurch gekennzeichnet, dass** ein distaler Abschnitt des wenigstens einen Profilelements (6) einen gezackten und/oder trapezförmigen Verlauf aufweist.

**13.** Rotor (106) für eine Windenergieanlage (100) umfassend mindestens ein Rotorblatt (1, 108), mit

- einer sich zwischen Rotorblattwurzel (4) und Rotorblattspitze (5) über eine Rotorblattlänge (10) ersteckenden Rotorblatthinterkante (3) und Rotorblattvorderkante (2),
- einer sich zwischen der Rotorblattvorderkante (2) und der Rotorblatthinterkante (3) einstellenden Profiltiefe,
- einem einstellbaren Pitchwinkel,
- wobei das Rotorblatt (1, 108) wenigstens ein Profilelement (6) aufweist, das an der Rotorblatthinterkante (3) oder im Bereich angrenzend an die Rotorblatthinterkante (3) zur Vergrößerung der Profiltiefe um einen Vergrößerungsbetrag (L1, L2, L3) angeordnet ist,
**gekennzeichnet durch** eine Steuerungseinheit (200) zur Bestimmung eines einzustellenden Pitchwinkels, die eingerichtet ist, den einzustellenden Pitchwinkel in Abhängigkeit von dem Vergrößerungsbetrag (L1, L2, L3) zu bestimmen,
, wobei das Profilelement (6) verstellbar ist, sodass zumindest ein erster Vergrößerungsbetrag (L1) und ein zweiter Vergrößerungsbetrag (L2) einstellbar ist, wobei der erste Vergrößerungsbetrag (L1) kleiner ist als der zweite Vergrößerungsbetrag (L2), und vorzugsweise die Steuerungseinheit eingerichtet ist, bei Einstellung des zweiten Vergrößerungsbetrags (L2) einen kleineren Pitchwinkel zu bestimmen als bei Einstellung des ersten Vergrößerungsbetrags.

**14.** Windenergieanlage (100) umfassend einen Rotor (106) nach einem der vorherigen Ansprüche.

15. Verfahren (300) zur Ertragssteigerung eines Rotors (106) einer Windenergieanlage (100) mit einem einstellbaren Pitchwinkel, einer sich zwischen Rotorblattwurzel (4) und Rotorblattspitze (5) über eine Rotorblattlänge (10) ersteckenden Rotorblatthinterkante (3) und Rotorblattvorderkante (2), einer sich zwischen der Rotorblattvorderkante (2) und der Rotorblatthinterkante (3) einstellenden Profiltiefe, wobei an der Rotorblatthinterkante (3) oder im Bereich angrenzend an die Rotorblatthinterkante (3) wenigstens ein Profilelement (6) zur Vergrößerung der Profiltiefe um wenigstens einen Vergrößerungsbetrag angeordnet ist (S310), **dadurch gekennzeichnet, dass** der einzustellende Pitchwinkel in Abhängigkeit von dem Vergrößerungsbetrag bestimmt wird (S320) und das wenigstens eine Profilelement (6) in einem Bereich zwischen 70 % und 100 % einer relativen Rotorblattlänge (10) angeordnet ist.

**Claims**

1. A rotor (106) for a wind turbine (100), comprising at least one rotor blade (1, 108), having

    - a rotor blade trailing edge (3) and rotor blade leading edge (2) extending between the rotor blade root (4) and the rotor blade tip (5) over a rotor blade length (10),
    - a profile depth established between the rotor blade leading edge (2) and the rotor blade trailing edge (3),
    - and an adjustable pitch angle,
    - wherein the rotor blade (1, 108) has at least one profile element (6) which is arranged on the rotor blade trailing edge (3) or in the region adjacent to the rotor blade trailing edge (3) for increasing the profile depth by an enlargement value (L1, L2, L3),
    - **characterized by** a control unit (200) for determining a pitch angle to be set, which is configured to determine the pitch angle to be set depending on the enlargement value (L1, L2, L3), wherein the at least one profile element (6) is arranged in a region of between 70% and 100% of a relative rotor blade length (10).

2. The rotor (106) as claimed in claim 1, **characterized in that** the control unit (200) is configured to determine the pitch angle to be set depending on two or more enlargement values (L1, L2, L3) and/or on a profile of the enlargement value.

3. The rotor (106) as claimed in either of the preceding claims, **characterized in that** the control unit (200) is configured to determine the pitch angle to be set in indirect dependence on the enlargement value.

4. A rotor (106) for a wind turbine (100), comprising at least one rotor blade (1, 108), having

    - a rotor blade trailing edge (3) and rotor blade leading edge (2) extending between the rotor blade root (4) and the rotor blade tip (5) over a rotor blade length (10),
    - a profile depth established between the rotor blade leading edge (2) and the rotor blade trailing edge (3),
    - and an adjustable pitch angle,
    - wherein the rotor blade (1, 108) has at least one profile element (6) which is arranged on the rotor blade trailing edge (3) or in the region adjacent to the rotor blade trailing edge (3) for increasing the profile depth by an enlargement value (L1, L2, L3),
    - **characterized by** a control unit (200) for determining a pitch angle to be set, which is configured to determine the pitch angle to be set in direct dependence on the enlargement value (L1, L2, L3),

5. The rotor (106) as claimed in one of the preceding claims, **characterized in that** the control unit (200) is configured to take into account an induction factor, a wind speed in the rotor blade plane, at least one local angle of attack and/or an air density when determining the pitch angle.

6. The rotor (106) as claimed in one of the preceding claims,

    **characterized in that** the rotor blade (1, 108) has a maximum angle of attack which is **characterized by** a substantially separation-free flow around the rotor blade (1, 108), and the control unit (200) is configured to take into account the maximum angle of attack, which is increased by the at least one profile element (6), when determining the pitch angle to be set.

7. A rotor (106) for a wind turbine (100), comprising at least one rotor blade (1, 108), having

    - a rotor blade trailing edge (3) and rotor blade leading edge (2) extending between the rotor blade root (4) and the rotor blade tip (5) over a rotor blade length (10),
    - a profile depth established between the rotor blade leading edge (2) and the rotor blade trailing edge (3),
    - and an adjustable pitch angle,
    - wherein the rotor blade (1, 108) has at least one profile element (6) which is arranged on the rotor blade trailing edge (3) or in the region adjacent to the rotor blade trailing edge (3) for increasing the profile depth by an enlargement value (L1, L2, L3),

**characterized by** a control unit (200) for determining a pitch angle to be set, which is configured to determine the pitch angle to be set depending on the enlargement value (L1, L2, L3), and in that the control unit (200) is configured to control the pitch angle to be set in such a way that an angle-of-attack reserve of the rotor blade (1, 108) is set substantially independently of the enlargement value (L1, L2, L3), wherein the angle-of-attack reserve is defined as the angle between a maximum angle of attack, which is **characterized by** a substantially separation-free flow around the rotor blade (1, 108), and an angle of attack that is currently applied on the basis of the setting of the pitch angle.

8. The rotor (106) as claimed in claim 7, **characterized in that** the control unit (200) is configured to set the pitch angle taking into account a maximum angle of attack, which is increased by the profile element (6), and/or an increased stall angle.

9. The rotor (106) as claimed in one of the preceding claims, **characterized in that** the control unit (200) takes into account design loads of the wind turbine (100) for determining the pitch angle, wherein the control unit is preferably configured to compare operating loads of the wind turbine (100) with the design loads.

10. The rotor (106) as claimed in one of the preceding claims, **characterized in that** the enlargement value (L1, L2, L3) is less than or equal to 20%, preferably less than or equal to 15%, in particular less than or equal to 10%, of the profile depth.

11. The rotor (106) as claimed in one of the preceding claims, **characterized in that** the at least one profile element (6) extends at least in sections over the rotor blade length (10).

12. The rotor (106) as claimed in one of the preceding claims, **characterized in that** a distal section of the at least one profile element (6) has a serrated and/or trapezoidal profile.

13. A rotor (106) for a wind turbine (100), comprising at least one rotor blade (1, 108), having

- a rotor blade trailing edge (3) and rotor blade leading edge (2) extending between the rotor blade root (4) and the rotor blade tip (5) over a rotor blade length (10),
- a profile depth established between the rotor blade leading edge (2) and the rotor blade trailing edge (3),
- and an adjustable pitch angle,
- wherein the rotor blade (1, 108) has at least one profile element (6) which is arranged on the rotor blade trailing edge (3) or in the region adjacent to the rotor blade trailing edge (3) for increasing the profile depth by an enlargement value (L1, L2, L3),

**characterized by** a control unit (200) for determining a pitch angle to be set, which is configured to determine the pitch angle to be set depending on the enlargement value (L1, L2, L3), wherein the profile element (6) is adjustable such that at least a first enlargement value (L1) and a second enlargement value (L2) can be set, wherein the first enlargement value (L1) is smaller than the second enlargement value (L2), and preferably the control unit is configured to determine a smaller pitch angle when setting the second enlargement value (L2) than when setting the first enlargement value.

14. A wind turbine (100) comprising a rotor (106) as claimed in one of the preceding claims.

15. A method (300) for increasing the yield of a rotor (106) of a wind turbine (100) with an adjustable pitch angle, a rotor blade trailing edge (3) and a rotor blade leading edge (2) extending between the rotor blade root (4) and the rotor blade tip (5) over a rotor blade length (10), and a profile depth established between the rotor blade leading edge (2) and the rotor blade trailing edge (3), wherein at least one profile element (6) for increasing the profile depth by at least one enlargement value (S310) is arranged on the rotor blade trailing edge (3) or in the region adjacent to the rotor blade trailing edge (3), **characterized in that** the pitch angle to be set is determined depending on the enlargement value (S320) and the at least one profile element (6) is arranged in a region of between 70% and 100% of a relative rotor blade length (10).

**Revendications**

1. Rotor (106) pour une éolienne (100) comprenant au moins une pale de rotor (1, 108), avec

- un bord de fuite de pale de rotor (3) et un bord d'attaque de pale de rotor (2) s'étendant entre la racine de pale de rotor (4) et la pointe de pale de rotor (5) sur une longueur de pale de rotor (10),
- une profondeur de profilé réglant entre le bord d'attaque de pale de rotor (2) et le bord de fuite de pale de rotor (3),
- un angle de pas réglable,
- dans lequel la pale de rotor (1, 108) présente au moins un élément profilé (6), qui est disposé sur le bord de fuite de pale de rotor (3) ou dans la zone adjacente au bord de fuite de pale de rotor (3) pour agrandir la profondeur de profilé d'une valeur d'agrandissement (L1, L2, L3),
- **caractérisé par** une unité de commande (200) de détermination d'un angle de pas à régler, qui est mise au point pour définir l'angle de pas à régler en fonction de la valeur d'agrandissement (L1, L2, L3), dans lequel l'au moins un élément profilé (6) est disposé dans une zone entre 70 % et 100 % d'une longueur relative de pale de rotor (10).

2. Rotor (106) selon la revendication 1, **caractérisé en ce que** l'unité de commande (200) est mise au point pour déterminer l'angle de pas à régler en fonction de deux ou plus valeurs d'agrandissement (L1, L2, L3) et/ou d'une courbe de la valeur d'agrandissement.

3. Rotor (106) selon l'une quelconque des revendications précédentes, **caractérisé en ce que** l'unité de commande (200) est mise au point pour déterminer l'angle de pas à régler en fonction indirectement de la valeur d'agrandissement.

4. Rotor (106) pour une éolienne (100) comprenant au moins une pale de rotor (1, 108), avec

- un bord de fuite de pale de rotor (3) et un bord d'attaque de pale de rotor (2) s'étendant entre la racine de pale de rotor (4) et la pointe de pale de rotor (5) sur une longueur de pale de rotor (10),
- une profondeur de profilé réglant entre le bord d'attaque de pale de rotor (2) et le bord de fuite de pale de rotor (3),
- un angle de pas réglable,
- dans lequel la pale de rotor (1, 108) présente au moins un élément profilé (6), qui est disposé sur le bord de fuite de pale de rotor (3) ou dans la zone adjacente au bord de fuite de pale de rotor (3) pour agrandir la profondeur de profilé d'une valeur d'agrandissement (L1, L2, L3),
- **caractérisé par** une unité de commande (200) de détermination d'un angle de pas à régler, qui est mise au point pour déterminer l'angle de pas à régler en fonction directement de la valeur d'agrandissement (L1, L2, L3).

5. Rotor (106) selon l'une quelconque des revendications précédentes, **caractérisé en ce que** l'unité de commande (200) est mise au point pour prendre en compte un facteur d'induction, une vitesse du vent dans le plan de pale de rotor, au moins un angle d'incidence local et/ou une densité de l'air lors de la détermination de l'angle de pas.

6. Rotor (106) selon l'une quelconque des revendications précédentes,

**caractérisé en ce que** la pale de rotor (1, 108) présente un angle d'incidence maximal, qui est **caractérisé par** un écoulement autour de la pale de rotor (1, 108) sensiblement sans décollement, et

l'unité de commande (200) est mise au point pour tenir compte de l'angle d'incidence maximal augmenté par l'au moins un élément profilé (6) lors de la détermination de l'angle de pas à régler.

7. Rotor (106) pour une éolienne (100) comprenant au moins une pale de rotor (1, 108), avec

- un bord de fuite de pale de rotor (3) et un bord d'attaque de pale de rotor (2) s'étendant entre la racine de pale de rotor (4) et la pointe de pale de rotor (5) sur une longueur de pale de rotor (10),
- une profondeur de profilé réglant entre le bord d'attaque de pale de rotor (2) et le bord de fuite de pale de rotor (3),
- un angle de pas réglable,
- dans lequel la pale de rotor (1, 108) présente au moins un élément profilé (6), qui est disposé sur le bord de fuite de pale de rotor (3) ou dans la zone adjacente au bord de fuite de pale de rotor (3) pour agrandir la profondeur de profilé d'une valeur d'agrandissement (L1, L2, L3),

**caractérisé par** une unité de commande (200) destinée à déterminer un angle de pas à régler, qui est mise au point pour déterminer l'angle de pas à régler en fonction de la valeur d'agrandissement (L1, L2, L3) et pour commander l'angle de pas à régler de telle manière qu'une réserve d'angle d'incidence de la pale (1, 108) se règle sensiblement indépendamment de la valeur d'agrandissement (L1, L2, L3), dans lequel la réserve d'angle d'incidence est définie comme l'angle entre un angle d'incidence maximal, qui est **caractérisé par** un écoulement autour de la pale de rotor (1, 108) sensiblement sans décollement, et un angle d'incidence actuellement appliqué sur la base du réglage de l'angle de pas.

8. Rotor (106) selon la revendication 7, **caractérisé en ce que** l'unité de commande (200) est mise au point pour régler l'angle de pas en tenant compte d'un angle d'incidence maximal augmenté par l'élément profilé (6) et/ou d'un angle de rupture d'écoulement augmenté.

9. Rotor (106) selon l'une quelconque des revendications précédentes, **caractérisé en ce que** l'unité de commande (200) prend en compte des charges de conception de l'éolienne (100) pour déterminer l'angle de pas, dans lequel l'unité de commande est de préférence mise au point pour comparer des charges de fonctionnement de l'éolienne (100) aux charges de conception.

10. Rotor (106) selon l'une quelconque des revendications précédentes, **caractérisé en ce que** la valeur d'agrandissement (L1, L2, L3) est inférieure ou égale à 20 %, de préférence est inférieure ou égale à 15 %, en particulier est inférieure ou égale à 10 %, de la profondeur de profilé.

11. Rotor (106) selon l'une quelconque des revendications précédentes, **caractérisé en ce que** l'au moins un élément profilé (6) s'étend au moins par endroits sur la longueur de pale de rotor (10).

12. Rotor (106) selon l'une quelconque des revendications précédentes, **caractérisé en ce qu'**une section distale de l'au moins un élément profilé (6) présente un contour cranté et/ou trapézoïdal.

13. Rotor (106) pour une éolienne (100) comprenant au moins une pale de rotor (1, 108), avec

   - un bord de fuite de pale de rotor (3) et un bord d'attaque de pale de rotor (2) s'étendant entre la racine de pale de rotor (4) et la pointe de pale de rotor (5) sur une longueur de pale de rotor (10),
   - une profondeur de profilé réglant entre le bord d'attaque de pale de rotor (2) et le bord de fuite de pale de rotor (3),
   - un angle de pas réglable,
   - dans lequel la pale de rotor (1, 108) présente au moins un élément profilé (6), qui est disposé sur le bord de fuite de pale de rotor (3) ou dans la zone adjacente au bord de fuite de pale de rotor (3) pour agrandir la profondeur de profilé d'une valeur d'agrandissement (L1, L2, L3),

   **caractérisé par** une unité de commande (200) de détermination d'un angle de pas à régler, qui est mise au point pour déterminer l'angle de pas à régler en fonction de la valeur de grossissement (L1, L2, L3), dans lequel l'élément profilé (6) peut être ajusté si bien qu'au moins une première valeur d'agrandissement (L1) et une deuxième valeur d'agrandissement (L2) peuvent être réglées, dans lequel la première valeur d'agrandissement (L1) est inférieure à la deuxième valeur d'agrandissement (L2) et, de préférence, l'unité de commande est mise au point pour déterminer un angle de pas variable plus petit lors du réglage de la deuxième valeur d'agrandissement (L2) que lors du réglage de la première valeur d'agrandissement.

14. Éolienne (100) comprenant un rotor (106) selon l'une quelconque des revendications précédentes.

15. Procédé (300) d'augmentation du rendement d'un rotor (106) d'une éolienne (100) avec un angle de pas réglable, un bord de fuite de pale de rotor (3) et un bord d'attaque de pale de rotor (2) s'étendant entre la racine de pale de rotor (4) et la pointe de pale de rotor (5) sur une longueur de pale de rotor (10), une profondeur de profilé réglant entre le bord d'attaque de pale de rotor (2) et le bord de fuite de pale de rotor (3), dans lequel au moins un élément profilé (6) est disposé sur le bord de fuite de pale de rotor (3) ou dans la zone adjacente au bord de fuite de pale de rotor (3) pour augmenter la profondeur de profilé d'au moins une valeur d'agrandissement (S310), **caractérisé en ce que** l'angle de pas à régler est déterminé en fonction de la valeur d'agrandissement (S320) et que l'au moins un élément profilé (6) est disposé dans une plage entre 70 % et 100 % d'une longueur relative de pale de rotor (10).

Fig. 1

Fig. 2

Fig. 3

Fig. 4

Fig. 5

Fig. 6

Fig. 7

300

S310

S320

Fig. 8

**EP 3 990 774 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008016007 A1
- DE 102009050577 A1
- DE 102015113404 A1
- DE 102018100397 A1
- US 20090028704 A1
- US 20130115082 A1
- EP 2778401 A2
- EP 2253838 A1